Europäisches Patentamt

European Patent Office

Office européen des brevets

(19)

(11) Veröffentlichungsnummer: **0 149 101**
**B1**

(12) # EUROPÄISCHE PATENTSCHRIFT

(45) Veröffentlichungstag der Patentschrift:
03.02.88

(21) Anmeldenummer: **84114775.4**

(22) Anmeldetag: **05.12.84**

(51) Int. Cl.⁴: **H 04 N 5/64,** G 11 B 33/02

(54) **Bildtonrecorder mit einklappbarem Flachbildschirm.**

(30) Priorität: **07.12.83 DE 3344211**

(43) Veröffentlichungstag der Anmeldung:
**24.07.85 Patentblatt 85/30**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**EP-A-0 084 605**
**DE-A-2 722 930**
**DE-A-3 119 209**
**FR-A-2 310 665**
**US-A-4 220 338**

(73) Patentinhaber: **Haberkern, Ottmar, Reuchlinstrasse
24, D-6200 Wiesbaden (DE)**
Patentinhaber: **Kahl, Horst, Kirchstrasse 13, D-6148
Heppenheim 5 (DE)**

(72) Erfinder: **Haberkern, Ottmar, Reuchlinstrasse 24,
D-6200 Wiesbaden (DE)**
Erfinder: **Kahl, Horst, Kirchstrasse 13, D-6148
Heppenheim 5 (DE)**

(74) Vertreter: **Quermann, Helmut, Dipl.- Ing., Postfach
6145 Gustav- Freytag- Strasse 25, D-6200
Wiesbaden (DE)**

EP 0 149 101 B1

## Beschreibung

Die Erfindung betrifft einen Bildtonrecorder in Art eines kofferartig zusammenklappbarem Gehäuses mit einem Gehäusedeckelteil zur Aufnahme eines flachen Bildschirmes oder einer flachen Bildröhre sowie einem Gehäusebodenteil zur Aufnahme von Bedienelementen, einer Bildaufzeichnungseinrichtung sowie Zusatzsteckern zur Verbindung mit Peripheriegeräten, wobei die beiden Gehäuseteile durch Scharniere miteinander verbunden sind, und der Bildtonrecorder Lautsprecher aufweist.

Aus der EP-A- 84 605 ist ein Bildtonrecorder der genannten Art bekannt, bei dem die Lautsprecher in der Deckfläche des Gehäusebodenteiles oder in dessen Frontfläche angeordnet sind oder aber die Lautsprecher mittels Steckscharnieren mit dem Gehäusedeckelteil verbunden sind.

Es ist Aufgabe vorliegender Erfindung, einen kompakt gebauten Bildtonrecorder der genannten Art zu schaffen, der aufgrund seiner Bauweise umkompliziert tragbar und einfach aufstellbar ist und die Erzielung von Stereotoneffekten ermöglicht.

Gelöst wird die Aufgabe dadurch, daß die Scharniere so groß ausgebildet sind, daß sie zur Aufnahme von Stereolautsprechern dienen.

In den Figuren ist die Erfindung an einer Ausführungsform beispielsweise dargestellt. Es stellt dar:

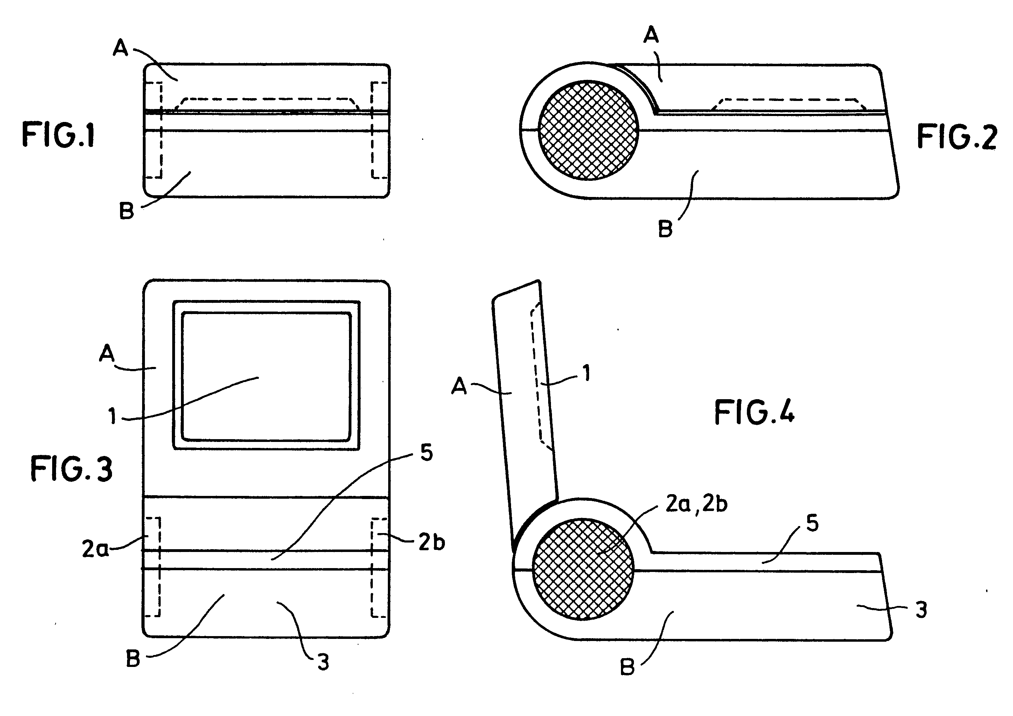

Figur 1 den erfindungsgemäßen Bildtonrecorder in schematischer Frontansicht in zusammengeklapptem Zustand,

Figur 2 eine Seitenansicht des zusammengeklappten Gerätes,

Figur 3 das Gerät in schematischer Frontansicht in aufgeklapptem Zustand und

Figur 4 eine Seitenansicht des aufgeklappten Gerätes.

Im Gehäusedeckelteil A befindet sich an Platz 1 ein flacher Bildschirm oder gegebenenfalls eine flache Bildröhre. Im Bodenteil B befindet sich an Platz 5 eine Bildaufzeichnungseinrichtung, zudem kann ein abnehmbares Bildaufzeichnungsmodul vorgesehen sein, das an eine Fernsehkammera angesteckt werden kann. Bei zusätzlichem Bildtelefon ist im Bereich von Platz 5 eine Tastatur vorgesehen.

Die Seiten- und Frontplatten des Bildtonrecorders sind im Bereich 3 zur Aufnahme der Bedienelemente und mit Zusatzsteckern ausgerüstet, die zur Aufnahme der externen Peripherie dienen, zum Beispiel Heimcomputer, Videospiele, Telefonanschluß, Tastatur für Videotext und BTX.

Die großflächigen Scharniere 2a und 2b enthalten die erfindungsgemäßen Stereolautsprecher in Form von Stereominiaturlautsprechern.

## Patentansprüche

1. Bildtonrecorder in Art eines kofferartig zusammenklappbarem Gehäuses mit einem Gehäusedeckelteil (A) zur Aufnahme eines flachen Bildschirmes oder einer flachen Bildröhre sowie einem Gehäusebodenteil (B) zur Aufnahme von Bedienelementen, einer Bildaufzeichnungseinrichtung sowie Zusatzsteckern zur Verbindung mit Peripheriegeräten, wobei die beiden Gehäuseteile durch Scharniere (2a, 2b) miteinnder verbunden sind, und der Bildtonrecorder Lautsprecher aufweist, dadurch gekennzeichnet, daß die Scharniere (2a, 2b) so groß ausgebildet sind, daß sie zur Aufnahme von Stereolautsprechern dienen.

## Claim

Audio/video recording apparatus in the form of a housing which is collapsible in the manner of a case, having a housing cover part (A) for receiving a flat screen or a flat picture tube, as well as a housing base part (B) for receiving control elements, an image recording device and auxiliary plugs for connection with peripheral equipment, the two housing parts being interconnected by hinges (2a, 2b), and the audio/video recording apparatus having loudspeakers, characterized in that the hinges (2a, 2b) are designed large enough for them to receive stereo loudspeakers.

## Revendication

Appareil d'enregistrement d'image et de son en forme de boîtier pliant comportant une partie (A) formant couvercle du boîtier destinée à recevoir un écran plat, ou un tube image plat, ainsi qu'une partie (B) formant fond du boîtier destinée à recevoir des organes de service, un dispositif d'enregistrement des images, ainsi que des prises supplémentaires pour la connexion d'appareils périphériques, pendant que les deux parties du boîtier sont reliées ensemble par des charnières (2a, 2b) et que l'appareil d'enregistrement d'image et de son comporte un haut-parleur, appareil caractérisé en ce que les charnières (2a, 2b) sont réalisées à une dimension telle qu'elles servent à recevoir les hauts-parleurs micro-processeurs.

FIG.1

A

B

FIG.2

A

B

FIG.3

A

1

2a

B

5

2b

3

FIG.4

A

1

2a ,2b

5

B

3

0 149 101